# EUROPEAN PATENT APPLICATION

(11) **EP 2 314 884 A2**
(43) Date of publication of application: **27.04.2011**
(21) Application number: 10188427.8
(22) Date of filing: 21.10.2010
(51) Int. Cl.: F15B 11/036

(54) **Actuator assembly**

(30) Priority: 21.10.2009 GB 0918364
(71) Applicant: Proseal UK Limited, Adlington SK10 4NL (GB)
(72) Inventor: Phythian, Carl John, Wilmslow, Cheshire SK9 6LL (GB)
(74) Representative: Wilson Gunn

(57) **Abstract**

An actuator assembly comprising a first cylinder housing (13) a first piston and a second cylinder housing (12) a second piston. The first and second pistons are coupled together, and the first cylinder (13) is provided with a selectively closable conduit (17) enabling fluid to flow from one s ide of the first piston to the other and a flow restrictor (22a) enabling the rate of fluid flow through the conduit (17) to be selectively controlled. The flow restrictor (22a) may serve to selectively close the conduit (17). There may be a second selectively closable conduit (18) provided in parallel with the first conduit (17) over all or part of the length of the first conduit (17). The second conduit (18) may have a larger flow capacity than the first conduit (17). The actuator may be operated by compressed air or gas, or another suitable fluid, for example a liquid such as oil or water. The actuator assembly may be provided with a control means to automatically control its operation.

## Description

The present invention relates to an actuator assembly. It also relates to a sealing machine comprising an actuator assembly.

Heat sealing machines are employed to apply and seal plastics film lids to plastics food containers. Existing machines employ a pneumatic actuator comprising a single cylinder and piston to raise a lower a tool supporting a food container and urge it towards a sprung, heated platen with a film layer sandwiched between the two, thereby to seal the film to the container. It is desirable to increase the number of containers that can be supported by the lower tool to increase the throughput of the machine. A greater number of containers necessitates that a greater force be provided by the pneumatic actuator which, for a given air supply, necessitates a greater piston area. For a given piston stoke an increase in piston area results in an increase in the volume of compressed air required to operate the actuator. Providing a greater volume of compressed air results in increased energy usage, which is undesirable. Also, the capacity of an existing air supply can be exceeded with the result that operating frequency of the machine is reduced and the envisaged increase in throughput is not achieved.

It has been proposed to address this problem by providing an actuator comprising two cylinders with respective pistons coupled together, and providing one cylinder with a bypass enabling air on one side of the piston to flow to the other side of the piston. This allows a proportion of compressed air to be recycled by using one piston to drive the tool over most of its stroke whilst allowing compressed air in the other piston to flow between opposite sides of the piston, and then closing the bypass for the remainder of the stroke enabling both pistons to be used to provide an increased force to urge the lower tool towards the sprung platen. Air in the larger cylinder can then be recycled again on the return stroke.

However, it has then been found that the increased forces involved when using larger tools cause a new problem on the return stroke. The increased force leads to an increased force being applied to, and therefore an increase in energy being stored by, the sprung platen. This energy tends to be released violently as the sprung platen decompresses, rapidly urging the tool and piston towards their starting position. This causes significant vibration which can be harmful to the machine and/or operators.

Embodiments of the present invention have been made in consideration of this problem.

According to an aspect of the present invention there is provided an actuator assembly comprising a first cylinder housing a first piston and a second cylinder housing a second piston, the first and second pistons being coupled together, and the first cylinder being provided with a selectively closable conduit enabling fluid to flow from one side of the first piston to the other and a flow restrictor enabling the rate of fluid flow through the conduit to be selectively controlled.

According to another aspect of the present invention there is provided a method of operation of an actuator assembly comprising a first cylinder housing a first piston and a second cylinder housing a second piston, the first and second pistons being coupled together, and he first cylinder being provided with a selectively closable conduit enabling fluid to flow from one side of the first piston to the other and a flow restrictor enabling the rate of flow fluid through the conduit to be selectively controlled, the method comprising the step of opening the bypass conduit and restricting flow of fluid through the conduit by means of the flow restrictor thereby to control movement of the first piston.

Provision of a flow restrictor enables the rate of fluid flow through the bypass conduit to be controlled which, in turn, enables movement of the first piston within its cylinder to be controlled when the bypass conduit is in operation. The flow restrictor enables movement of the first piston to be restricted, damping motion of the actuator. The flow restrictor can therefore be employed to selectively damp motion of the actuator, for example when the sprung platen decompresses, but otherwise to allow the piston to move freely, such as when it is being driven by the second piston.

The flow restrictor may serve to selectively close the conduit. Alternatively the conduit may be provided with other means to close it, such as a valve, disposed in series with the flow restrictor. A second selectively closable conduit may be provided in parallel with the first conduit over all or part of the length of the first conduit. The second conduit may enable fluid to bypass the flow restrictor thereby to allow substantially unrestricted flow between opposite sides of the first piston.

The second conduit may have a larger flow capacity than the first conduit. The ratio of flow capacity of the second conduit to the first conduit may be at least 5:1, in one embodiment at least 10:1 and in another embodiment at least 15:1.

A further conduit may be provided in parallel with the first conduit over all or part of its length. This further conduit may include a one-way valve. This enables fluid flowing on one direction only to bypass the flow restrictor.

The first piston may have a greater area than the second piston.

Each cylinder may be provided with a respective port on each side of the piston housed in the cylinder. For the first cylinder the bypass conduit may extend between the two ports.

The actuator assembly may be provided with a control means to automatically control its operation. On an operating stroke of the assembly in a first step the control means may be arranged to open the bypass conduit, and apply fluid under pressure to one side of the second piston In a subsequent step, after the pistons have moved through a predetermined part of their stroke the bypass conduit is closed, and fluid applied under pressure to the corresponding side of the first piston so that both pistons provide force to drive the actuator over the remainder of the piston stroke. In a subsequent step, fluid under pressure is no longer supplied to either cylinder, the bypass conduit is opened and flow of fluid within the bypass conduit is restricted by using the flow restrictor. This step continues whilst the pistons return over a predetermined part of their return stroke. During this stage, where the fluid is compressible, the second cylinder may be closed so that movement of the second piston causes fluid in the cylinder to be compressed as this piston moves. In a subsequent step, flow of fluid in the bypass conduit is no longer restricted. Fluid under pressure may then be applied to the opposite side of the second piston to previously so as to drive the pistons along the remainder of the return stroke.

The actuator may be operated by compressed air or gas, or another suitable fluid, for example a liquid such as oil or water.

The control means may be an electronic control means, and may be programmable.

There may be more than two cylinders. Two or more cylinders may be provided with a bypass conduit. A single bypass conduit may serve more two or more cylinders.

In order that the invention may be more clearly understood an embodiment thereof will now be described, by way of example only, with reference to the accompanying drawings, of which:
Figure 1 is a part cut-way elevational view of a heat sealing machine comprising an actuator assembly according to the invention; and
Figures 2 to 7 are diagrammatic views of the actuator assembly of the machine of Figure 1 in various operational states.

Heat sealing apparatus for applying heat sealed plastics film lids to food and other containers is known. Various types of heat sealing apparatus have previously been supplied by the applicant.

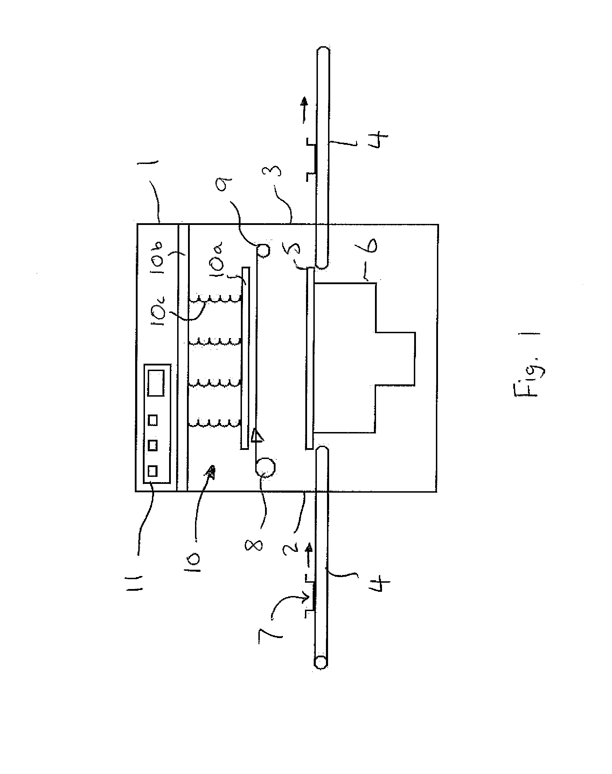

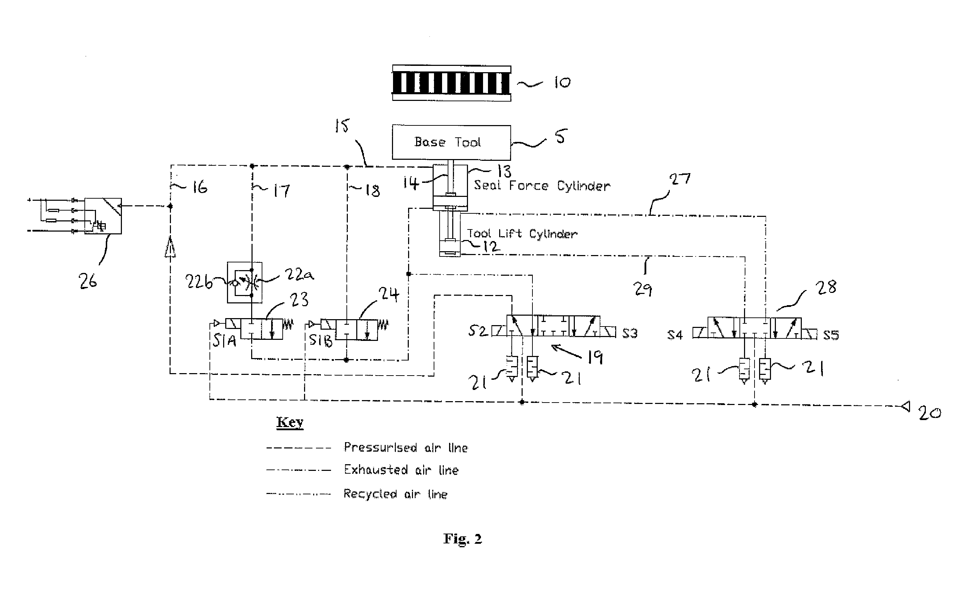

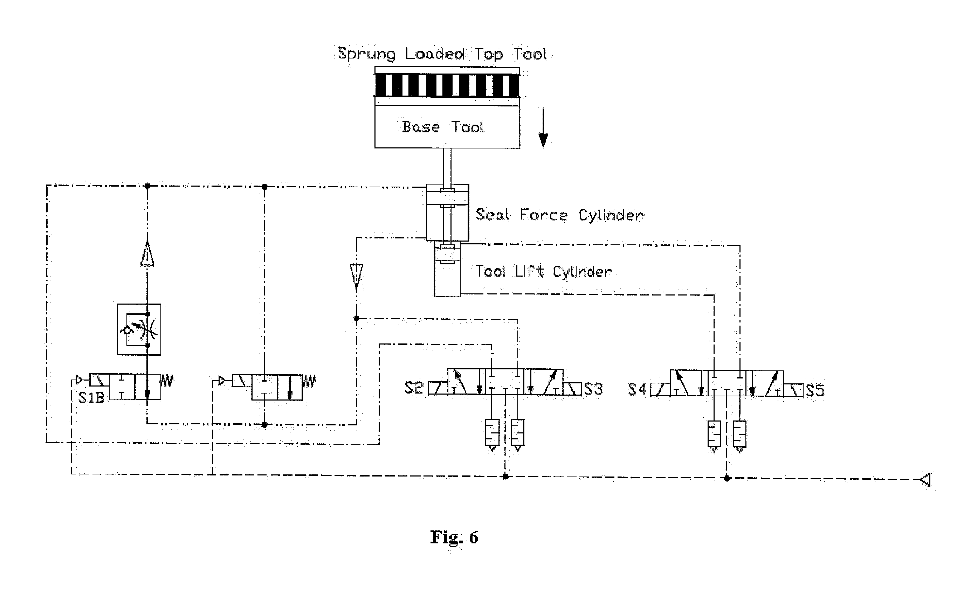

Referring to Figure 1 there is shown in a simplified form heat sealing apparatus which is conventional other than for its actuator assembly. The actuator assembly is described in detail below and illustrated in Figures 2 to 7.

Referring first to Figure 1 a heat sealing apparatus for heat sealing plastics film lids to food containers comprising a housing 1 housing heat sealing apparatus and defining inlet 2 and outlet 3 apertures into which extend respective conveyors 4. Containers without lids travel into the housing on a conveyor 4 through the inlet opening. A film lid is sealed to the container within the housing and the sealed container travels out of the housing through the outlet 3 on a conveyor 4.

Within the housing there is provided a base tool 5 supported on a pneumatic actuator assembly 6 arranged to raise and lower the base tool within the housing. The base tool defines one or more apertures. The or each aperture is for receiving a respective food container 7 having a rim, so that the container is supported by its rim, its rim resting on an upper surface of the base tool 5.

Spaced above the base tool and to opposite sides of the base tool are film supply 8 and take-up 9 rollers. A roll of plastics film is provided on the supply roller and plastics film extends from the supply roller to the take-up roller so that it extends above and spaced from the base tool. Spaced above the plastics film is a sprung loaded top tool, generally 10. The top tool comprises a heated platen 10a with its heated surface facing the plastics film, the heated platen being suspended from an upper support 10b by compression springs 10c or other suitable resilient means.

The conveyors 4 and actuator assembly 6 are controlled by an electronic, programmable, user operable control means 11.

In operation one or more containers are introduced into respective supporting apertures in the base tool 5. The actuator assembly 6 then raises an urges the base tool 5 towards the heated platen 10a. This causes rims of containers supported by the base tool to contact the plastics film which is then urged into contact with the heated platen. The actuator assembly raises the base tool sufficiently so that the compression springs 10c from which the heated platen 10a is suspended are at least partially compressed. This helps to ensure that where multiple containers are supported by a single base tool the entire rim of each container is urged into sealing contact with the plastics film and the plastics film, in turn, urged into contact with the heated platen thereby to seal the plastics film to the rim of the container. A cutting means (not shown) is provided to cut the plastics film around the rim of the or each container. The actuator assembly 6 then lowers the base tool 5 to its starting position enabling the sealed containers to be carried out of the machine by the conveyor 4. The plastics film is then advanced from the supply 8 to take-up 9 rollers so that a fresh sheet of film extends above the base tool, further containers can be introduced into the housing and the process repeated.

Referring now to Figures 2 to 7, the actuator assembly comprises a first, smaller, pneumatic cylinder 12 and associated piston and a second, larger, pneumatic cylinder 13 and associated piston. The two piston and cylinder assemblies 12,13 are connected together in tandem so that the two pistons move together. The base tool 5 is connected to the two pistons via a piston rod 14 for movement with the two pistons. The piston and cylinder assemblies are operated by compressed air and are connected to a pneumatic circuit.

Each cylinder is provided with two airflow ports disposed respectively at opposite ends of the cylinder so as to communicate with the space on opposite sides respectively of the piston disposed in the cylinder. Airflow lines formed by flexible pneumatic hoses are depicted in Figures 2 to 7 according to their use in the particular operational state shown as defined by the key included in Figure 2.

In this example the larger cylinder has a bore of about 200mm and a stroke of about 160mm. The smaller cylinder has an equivalent stroke, but a reduced bore, of about 80 to 100mm.

The general layout of the pneumatic circuit will now be described. References to upper and lower refer to the apparatus as shown in the drawings but should not be otherwise taken as limiting as the apparatus could operate in different orientations.

The upper end of the larger cylinder is connected to a line 15 which is connected in parallel to three further lines 16,17 and 18.

Line 16 extends to a solenoid operated valve 19 operated by solenoids S2 and S3. The valve 19 enables the line 16 to be selectively closed or connected to either a compressed air supply 20 or to exhaust 21. Line 16 is also connected to a pressure sensor 26.

Line 17 extends via a manually adjustable flow restrictor 22a arranged in parallel with a one-way valve 22b to solenoid operated valve 23, operated by solenoid S1A. Valve 23 enables line 17 to be selectively closed or connected to a line 25. The valve 23 has a diameter of about 9.5mm and allows for a flow rate of about 7600nL/min. The flow controller 22a enables the flow rate to be restricted to between 0 and 1000 nL/min. The one way valve 22b is oriented to allow fluid to flow from the upper part of the large cylinder 13 towards the valve 23, thus bypassing the flow controller 22a, but to prevent it flowing in the opposite direction so that fluid flowing in that direction along line 17 must pass through the flow controller 22a.

Line 18 extends to solenoid operated valve 24 operated by solenoid SIB. The valve 24 enables the line 18 to be selectively closed or connected to line 25. The valve 24 has a diameter of about 25mm and allows for a flow rate of about 16000 nL/min, significantly greater than that of valve 23.

Solenoids S1A, S1B are both pilot solenoids and are therefore also connected to a compressed air supply 20.

Line 25 connects in parallel to the lower port of the larger cylinder and to valve 19 operated by solenoids S2 and S3 and arranged to selectively close or connect the line 25 to either the compressed air supply 20 or an exhaust 21.

The upper port of the smaller cylinder is connected via line 27 to valve 28 operated by solenoids S4 and S5 and arranged to selectively close or connect the line to either the compressed air supply 20 or an exhaust 21.

The lower port of the smaller cylinder is connected via line 29 to valve 28 arranged to selectively close or connect the line to either the compressed air supply 20 or an exhaust 21.

The various solenoids are all under control of the control means 11, to which the pressure sensor 26 is also connected.

As an initialising step, solenoids S1A, S1B and S2 are all operated, closing lines 17 and 18, connecting line 16 to the compressed air supply 20 and line 25 to exhaust 21. Lines 28 and 29 remain closed. This causes lines 15, 16, 17 and 18, and the space above the piston of the larger cylinder to be pressurised, and line 25 and the space below the piston in the larger cylinder to flow to an exhaust driving both pistons to their lowermost position. Compressed air is allowed to flow into the circuit until a predetermined pressure is reached, as measured by the pressure sensor 26, at which point the solenoids are deactivated thereby closing line 25 to the exhaust 21 and connecting lines 17 and 18 to line 25 allowing pressure on both sides of the piston of the larger cylinder to equalise.

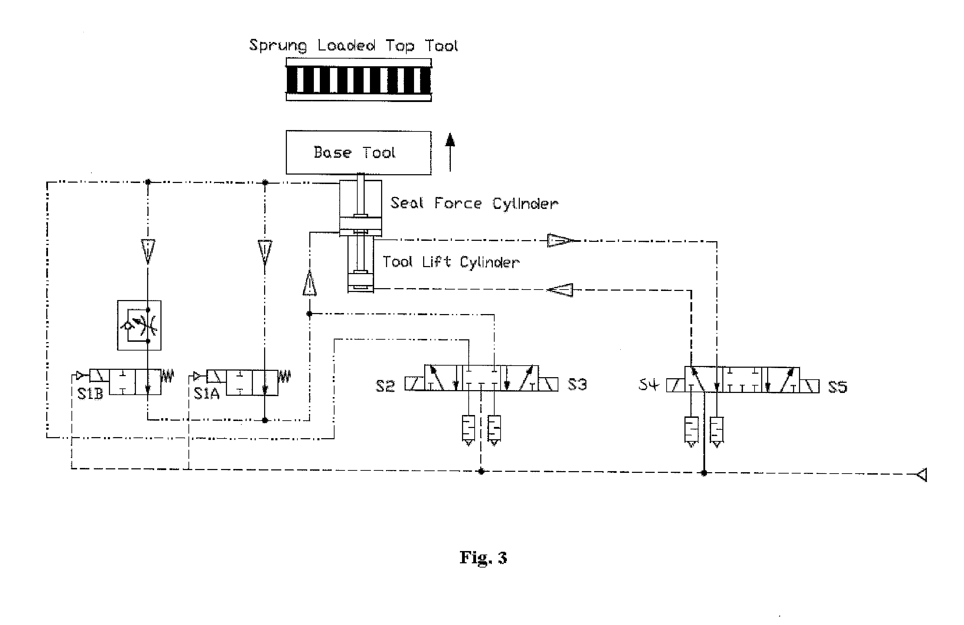

In the first stage of a normal sealing step solenoid S4 is then energised, as shown in figure 3. This allows compressed air to flow into the space below the piston of the lower cylinder, and for air above the cylinder to flow to exhaust. This causes the lower piston to provide a force urging the piston of the larger cylinder and the base tool upwards. As the pi ston of the larger cylinder moves upwards compressed air in the space above the piston flows via lines 17 and 18, valves 22 and 23 and line 25 to the space below the piston. During this process the air pressure on opposite sides of the piston of the large cylinder will be substantially the same and the cylinder does not contribute to the force provided by the actuator. The force raising the pistons and the base tool is provided only by the smaller cylinder and piston. The configuration shown in figure 3 is maintained until the pistons have travelled through about 145mm of their stroke.

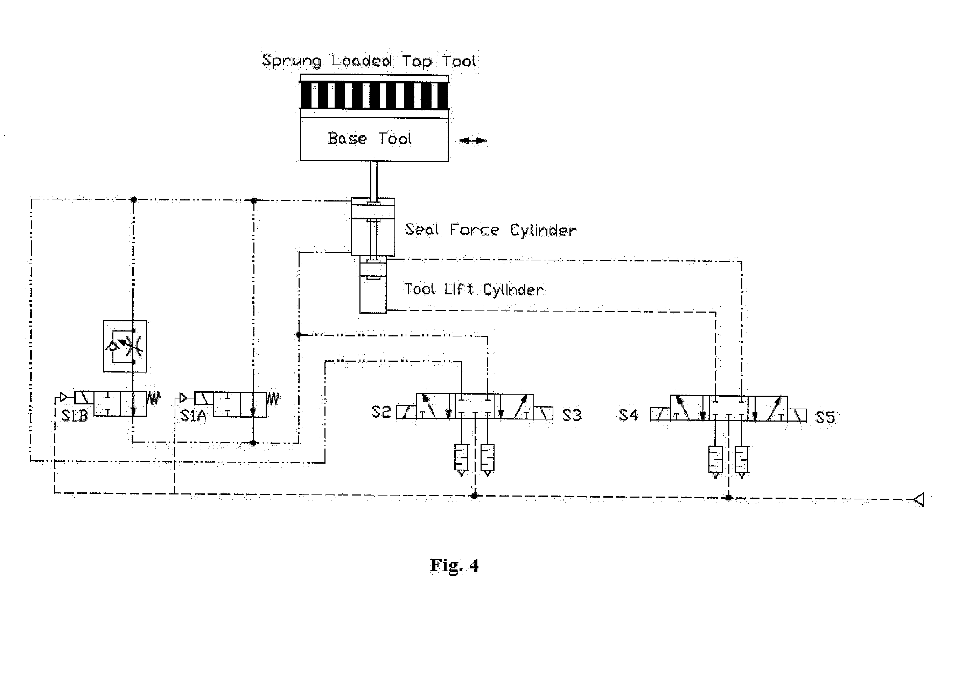

At this stage the lower tool 5 is about to make contact with the upper tool 10, and an optional dwell period can be incorporated into the process, for example to enable a gas to be injected into a food container before it is sealed. This is achieved by de-energising solenoid S4, as shown in figure 4, causing movement of the pistons to stop.

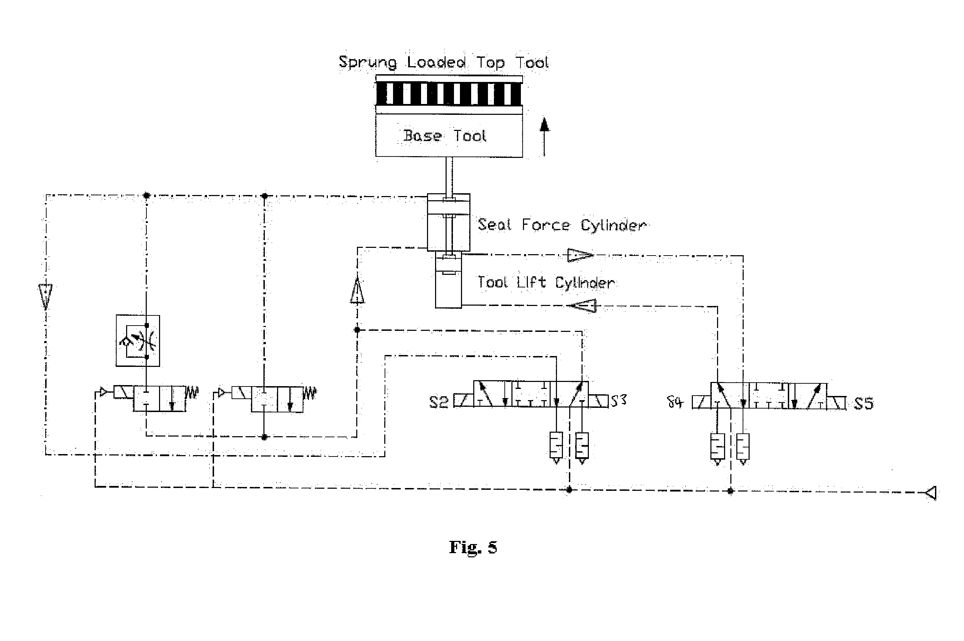

After any desired dwell period additional force is required to urge the two tools together so that the springs biasing the upper tool are at least partially compressed and thus ensure that a good seal is obtained. This is achieved by energising solenoids S1A, S1B, S3 and S4, as shown in figure 5. Energising solenoids S1A and S1B closes off lines 17 and 18 preventing compressed air from flowing between opposite sides of the piston of the larger cylinder. Energising solenoids S3 and S4 causes compressed air to be introduced from the supply 20 to the underside of both pistons, and allows remaining compressed air above the larger and smaller pistons to flow to an exhaust 21. Thus, both pistons now contribute force and the overall force applied to urge the tools together is significantly increased owing to the increased piston area being utilised. The apparatus maintains this state for a predetermined time sufficient for an adequate seal to be formed between a film and container.

After this time has expired solenoids S1B, S3 and S4 are de-energised. This disconnects the compressed air supply 20 from lines 25 and 29, and connects line 17 to line 25 via the flow restrictor 22a allowing air to flow at a controlled rate between opposite sides of the piston in the large cylinder. This leads to a gradual decrease in the force provided by this piston as air flows from the lower side of the piston to the upper. As the force decreases the opposing force provided by the compressed compression springs of the upper tool will begin to overcome the force provided by the two pistons and will urge the pistons back down. As the pistons are moved down by the springs, compressed air will be driven from one side of the large piston to the other via the flow restrictor which will act to damp movement of the piston by delaying equalisation of pressure on opposite sides of the piston The damping provided by the flow restrictor will prevent sudden movement of the pistons under action of the springs of the upper tool reducing vibration which would otherwise result, due to violent decompression of the springs.

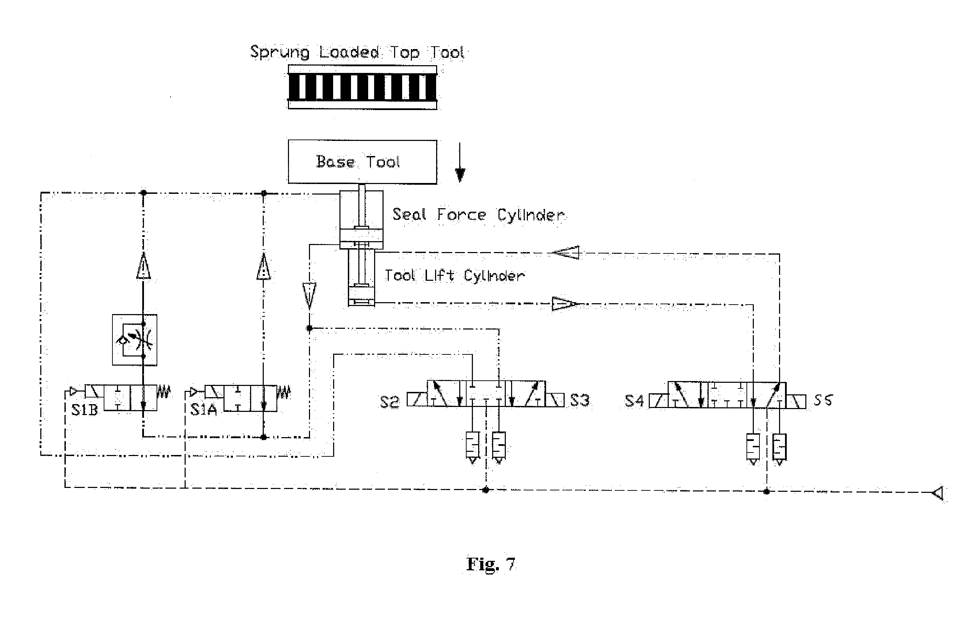

After the pistons have moved down in a controlled way by about 12mm, by which point the springs of the upper tool will have substantially decompressed, solenoid S1A is de-energised and solenoid S5 energised as shown in figure 7. This connects line 18 to line 25 allowing compressed air to flow in a substantially unrestricted way between opposite sides of the piston of the larger cylinder, and connects the space above the cylinder of the smaller piston to the compressed air supply 20 and the space below the smaller piston to an exhaust 21. The smaller piston thus now provides a force to urge the pistons and base tool downward back to the starting position. The process can then be repeated by returning to the configuration shown in figure 3.

Process is automatically controlled by the control means.

Lines 17 and 18 provide a bypass conduit allowing compressed air to flow between opposite sides of the piston in the larger cylinder. This allows the compressed air to be recycled, rather than being exhausted, over part of the stroke where a smaller force is required, with the force being provided by the smaller piston. For the remainder of the stroke, where a larger force is required, air pressure in the larger cylinder need only be topped up from the compressed air supply and both pistons act together to deliver a larger force.

As the actuator assembly acts to compress the sprung loaded upper tool there is considerable energy stored which must be dissipated when the springs are released. This could cause a violent reaction which could shorten the life of, or otherwise disrupt operation of the machine or cause injury to an operator. Providing the flow restrictor enables flow of compressed air between opposite sides of the piston of the larger cylinder via the bypass conduit to be controlled, thus controlling the rate of movement of piston and release of energy stored in the springs. As the flow restrictor can be selectively operated movement of the pistons of the actuator is not impaired during other stages of the operating cycle.

The above embodiment is described by way of example only. Many variations are possible without departing from the scope of the invention.

## Claims

1. An actuator assembly comprising a first cylinder housing a first piston and a second cylinder housing a second piston, the first and second pistons being coupled together, and the first cylinder being provided with a selectively closable conduit enabling fluid to flow from one side of the first piston to the other and a flow restrictor enabling the rate of fluid flow through the conduit to be selectively controlled.

2. An actuator assembly as claimed in claim 1, wherein the flow restrictor serves to selectively close the conduit.

3. An actuator assembly as claimed in claim 1, wherein the conduit is provided with a valve disposed in series with the flow restrictor to selectively close the conduit.

4. An actuator assembly as claimed in any preceding claim, wherein a second selectively closable conduit is provided in parallel with the first conduit over all or part of the length of the first conduit.

5. An actuator assembly as claimed in claim 4, wherein the second conduit enables fluid to bypass the flow restrictor thereby to allow substantially unrestricted flow between opposite sides of the first piston.

6. An actuator assembly as claimed in claim 4 or claim 5, wherein the second conduit has a larger flow capacity than the first conduit.

7. An actuator assembly as claimed in claim 6, wherein the ratio of flow capacity of the second conduit to the first conduit is at least 5:1.

8. An actuator assembly as claimed in any of claims 4 to 7, wherein a further conduit is provided in parallel with the first conduit over all or part of its length.

9. An actuator assembly as claimed in any preceding claim, wherein each cylinder is provided with a respective port on each side of the piston housed in the cylinder.

10. An actuator assembly as claimed in claim 11, wherein the bypass conduit for the first cylinder extends between the two ports.

11. An actuator assembly as claimed in any preceding claim, wherein the actuator assembly is provided with a control means to automatically control its operation.

12. An actuator assembly as claimed in any preceding claim, wherein the actuator is operated by compressed air or gas, or another suitable fluid, for example a liquid such as oil or water.

13. An actuator assembly as claimed in any preceding claim, comprising more than two cylinders.

14. An actuator assembly as claimed in any preceding claim, wherein two or more cylinders are provided with a bypass conduit.

15. A method of operation of an actuator assembly as claimed in any preceding claim, the method comprising the step of opening the bypass conduit and restricting flow of fluid through the conduit by means of the flow restrictor thereby to control movement of the first piston.
